# EUROPÄISCHE PATENTANMELDUNG

(11) **EP 4 099 050 A1**
(43) Veröffentlichungstag der Anmeldung: **07.12.2022**
(21) Anmeldenummer: 21176827.0
(22) Anmeldetag: 31.05.2021
(51) Int. Cl.: G01S 7/481, B29D 11/00, G01S 17/10, G02B 3/02, G02B 5/18, G02C 7/02

(54) **LIDAR-SENSOR UND VERFAHREN ZUR OPTISCHEN DISTANZMESSUNG**

(71) Anmelder: Ibeo Automotive Systems GmbH, 22143 Hamburg (DE)
(72) Erfinder: ASCHINGER, Andreas, 22143 Hamburg (DE); KIEHN, Michael, 22143 Hamburg (DE)
(74) Vertreter: RGTH

(57) **Zusammenfassung**

Die vorliegende Erfindung betrifft einen LIDAR-Sensor (10) zur optischen Distanzmessung, der eine Sendeeinheit (11) zum Aussenden von Messpulsen und eine Empfangseinheit (12) zum Empfangen reflektierter Messpulse und mindestens ein optisches Element (13) umfasst. Das optische Element (13) umfasst einen lichtdurchlässigen Träger (14) und mindestens eine auf zumindest einem Teil einer ersten Seite (14a) des Trägers (14) ausgebildete Mikrostruktur (16), wobei die Mikrostruktur (16) eine Höhe (22) zwischen 0,1 µm und 100 µm aufweist.

## Beschreibung

### Technisches Gebiet

Die Erfindung betrifft einen LIDAR-Sensor zur optischen Distanzmessung sowie ein entsprechendes Verfahren.

### Stand der Technik

LIDAR (Abkürzung für "Light Detection and Ranging") Sensoren sind aus dem Stand der Technik grundsätzlich bekannt. Sie umfassen eine Sendeeinheit zum Aussenden von Messpulsen sowie eine Empfangseinheit zum Empfangen reflektierter Messpulse, die an Objekten innerhalb eines Messbereiches des Sensors reflektiert wurden. Anhand des Time-of-Flight-Prinzips kann mit Hilfe der Lichtgeschwindigkeit auf die Distanz zu den Objekten, an denen die Messpulse reflektiert wurden, geschlossen werden.

Dabei werden Anforderungen an die Reichweite des LIDAR-Sensors gestellt, die zumindest empfangsseitig lichtstarke Linsensysteme erfordern. Auch bedarf eine Anwendung im Rahmen eines zumindest teilautonomen Fahrens möglichst große Blickwinkel des LIDAR-Sensors. Ferner erfordert die Dimensionierung der Sende- und Empfangsstrukturen eine sehr hohe Abbildungsgüte. Diese im Grundsatz gegensätzlichen Anforderungen erfordern hochklassige Objektive, die zum einen einfach herzustellen sind und zum anderen eine Integration in ein Fahrzeug bei minimalem Bauraum erlauben.

### Darstellung der Erfindung: Aufgabe, Lösung, Vorteile

Der Erfindung liegt die Aufgabe zugrunde, einen LIDAR-Sensor derart zu verbessern, dass die optische Leistungsfähigkeit optimiert wird, wobei der erforderliche Bauraum gleichzeitig deutlich reduziert wird.

Gelöst wird die oben genannte Aufgabe durch einen LIDAR-Sensor zur optischen Distanzmessung, der eine Sendeeinheit zum Aussenden von Messpulsen und eine Empfangseinheit zum Empfangen reflektierter Messpulse aufweist. Aus dem Laufzeitunterschied zwischen ausgesandter und reflektierter Messpulse kann somit auf Basis des Time-of-Flight-Prinzipes die Distanz zu einem Objekt, an dem Messpulse reflektiert wurden, bestimmt werden.

Der LIDAR-Sensor weist mindestens ein optisches Element auf, das einen lichtdurchlässigen Träger und mindestens eine Mikrostruktur umfasst, wobei die Mikrostruktur zumindest auf einem Teil einer ersten Seite des Trägers ausgebildet ist. Die Mikrostruktur weist eine Höhe zwischen 0,1 µm und 100 µm auf. Insbesondere kann die Höhe zwischen 0,5 µm und 50 µm liegen, am meisten bevorzugt zwischen 0,7 µm und 10 µm. Die Höhe erstreckt sich vorzugsweise parallel zur Dickenrichtung des Trägers.

Unter dem Begriff "Höhe" ist insbesondere der maximale Höhenunterschied der Mikrostruktur parallel zur Dickenrichtung gemeint. Die Mikrostruktur weist somit vorzugsweise ein Höhenprofil auf, wobei die Mikrostruktur unterschiedliche Bereiche, bspw. Stufen, verschiedener Höhen aufweisen kann. Der maximale Höhenunterschied kann sich auf unterschiedliche Bereiche der Mikrostruktur untereinander oder auf den maximalen Höhenunterschied zwischen der Mikrostruktur und der ersten Seite, in anderen Worten der Oberfläche der ersten Seite, des Trägers beziehen.

Dabei kann die Mikrostruktur in den ersten Träger eingebracht sein, in anderen Worten innerhalb des ersten Trägers ausgebildet sein, sodass sich die Höhe der Mikrostruktur in diesem Fall darauf bezieht, mit welcher maximalen Ausdehnung, in anderen Worten Tiefe, die Mikrostruktur in den Träger hinein ausgebildet ist. In diesem Fall weist die Mikrostruktur ein Tiefenprofil auf und der Begriff "Höhe" in Dickenrichtung kann als maximale Tiefe verstanden werden. Hier ist die Mikrostruktur und der Träger einstückig und aus demselben Material gebildet.

Ferner kann die Mikrostruktur auf der ersten Seite des Trägers aufgebracht sein, bspw. im Rahmen einer Beschichtung. Dann bezieht sich die Höhe auf den maximalen Höhenunterschied der Mikrostruktur zur ersten Seite des Trägers, in anderen Worten der Oberfläche der ersten Seite, oder auf den maximalen Höhenunterschied unterschiedlicher Bereiche der Mikrostruktur untereinander. Letzteres ist insbesondere dann der Fall, wenn die erste Seite in dem Bereich, in dem die Mikrostruktur angeordnet ist, gänzlich durch die Beschichtung bedeckt ist.

Als Beschichtung kommen Halbleiter-Kompositionen in Frage, wie bspw. Silizium oder Siliziumdioxid. Ferner kann auch Titandioxid, Galiumnitrid, Siliziumnitrid als Beschichtungsmaterial eingesetzt werden. Ferner können Polymerbeschichtungen, bspw. photothermische Schichten, vorzugsweise auf der Basis von Polyvinylchlorid, Polyvinylalkohol oder Acrylamid, eingesetzt werden.

Der Träger ist vorzugsweise als Substrat zu verstehen und kann aus Siliziumoxid oder Glas gebildet sein. Der Träger weist vor allem eine Zylinderform auf, wobei die erste Seite als Kreisfläche des Zylinders zu verstehen ist.

Insbesondere ist die Mikrostruktur in den Träger geätzt. Vorzugsweise ist die Mikrostruktur mittels eines fotolithografien Verfahrens auf bzw. in dem Träger ausgebildet worden, bspw. mittels Nanoimprint-Lithografie. Hier wird eine Schicht, bspw. eine Nanoimprintschicht, auf die erste Seite des Trägers aufgebracht, ein Nanostempel, in anderen Worten ein nanostrukturierter Stempel eingedrückt, die Schicht gehärtet und der Stempel entfernt, wobei in einem weiteren Ätzschritt ein entsprechendes Höhenbeziehungsweise Tiefenprofil in den Träger übertragen wird. Dieses Verfahren erlaubt eine einfache Herstellung hochqualitativer Linsen mit besten Abbildungseigenschaften.

Die Mikrostruktur dient zur Manipulation der Phasenfront des durch das optische Element tretenden Lichtes, insbesondere der Messpulse. Bei den Messpulsen handelt es sich vorzugsweise um Licht, insbesondere um Licht im Infrarotbereich. Die Messpulse weisen insbesondere eine Wellenlänge auf, die zwischen 600 nm und 1800 nm liegt. Insbesondere liegt die Wellenlänge zwischen 700 nm und 1100 nm, am meisten bevorzugt zwischen 800 nm und 1000 nm. Ferner kann die Wellenlänge zwischen 1300 nm und 1700 nm, am meisten bevorzugt zwischen 1500 nm und 1600 nm liegen.

Die optische Funktion des optischen Elementes ist auf einen sehr geringen Bereich, sprich auf den Bereich der Mikrostruktur, d.h. einem Mikrometerbereich, fokussiert.

Das optische Element weist eine Dicke von weniger als 7 mm, am meisten bevorzugt weniger als 4 mm, auf, wobei der Träger zu einem Großteil der Dicke beiträgt. Das optische Element weist insbesondere einen Durchmesser von kleiner als 15 mm, vorzugsweise kleiner als 10 mm auf. Somit entspricht der Durchmesser des optischen Elementes nahezu der Apertur des LIDAR-Sensors. Dabei führt die Kompaktheit der optischen Elemente zu geringeren Separationen der optischen Achsen des LIDAR-Sensors, was vorteilhaft ist, bspw. bei Detektionseinbußen aufgrund von Effekten der Parallaxe.

Es wird somit mindestens ein sehr flaches optisches Element im LIDAR-Sensor eingesetzt und somit der Bauraum des LIDAR-Sensors wesentlich reduziert. Die Reduktion des Bauraums bezieht sich dabei sowohl auf die Aufbauhöhe als auch auf den Durchmesser des optischen Elements. Dies ist im starken Gegensatz zu refraktiven Linsen, die, um eine entsprechende Abbildungsgüte zu erreichen, sehr dick realisiert werden müssen. Auch ist das Gewicht des optischen Elementes im Gegensatz zu bekannten Linsen deutlich reduziert, wobei gleichzeitig eine höhere optische Leistungsfähigkeit und bessere Abbildungsqualitäten erreicht werden.

Das optische Element weist auf zumindest 30 %, vorzugsweise auf zumindest 50 %, am meisten bevorzugt auf zumindest 70 %, der ersten Seite mindestens eine Mikrostruktur auf. Ferner kann auf der gesamten ersten Seite des Trägers mindestens eine Mikrostruktur ausgebildet sein.

Es kann auch auf zumindest einem Bereich einer zweiten Seite, bspw. auf zumindest 30 %, vorzugsweise auf zumindest 50 %, am meisten bevorzugt auf zumindest 70 % oder auf der ganzen zweiten Seite, mindestens eine Mikrostruktur ausgebildet sein. Die zweite Seite ist ferner bevorzugt die andere Kreisfläche des insbesondere zylinderförmigen Trägers. Die erste Seite und/oder die zweite Seite ist vorzugsweise eben oder gekrümmt ausgebildet. Dies bezieht sich insbesondere auf die entsprechende Seite bzw. Oberfläche ohne Mikrostruktur. Insbesondere ist die erste Seite und/oder die zweite Seite mathematisch gesehen differenzierbar ausgebildet und weist somit keine Knicke auf. Auch dies bezieht sich insbesondere auf die entsprechende Seite bzw. Oberfläche ohne Mikrostruktur.

Das optische Element ist insbesondere als Linse ausgebildet. Vorzugsweise ist das optische Element derart ausgebildet und angeordnet, um reflektierte Messpulse auf die Empfangseinheit des LIDAR-Sensors abzubilden und/oder um von der Sendeeinheit erzeugte Messpulse in eine Umgebung des LIDAR-Sensors abzubilden. Hinsichtlich der Anordnung kann das optische Element somit in Bewegungsrichtung der erzeugten Messpulse hinter der Sendeeinheit und/oder in Bewegungsrichtung der reflektierten Messpulse vor der Empfangseinheit angeordnet sein.

Ein optisches Element mit einem Träger und mindestens einer Mikrostruktur des LIDAR-Sensors kann somit sendeseitig angeordnet sein und somit ausschließlich dazu dienen, von der Sendeeinheit erzeugte Messpulse in eine Umgebung des LIDAR-Sensors abzubilden. Ferner kann ein optisches Element mit einem Träger und mindestens einer Mikrostruktur empfangsseitig angeordnet sein und ausschließlich dazu dienen, reflektierte Messpulse auf die Empfangseinheit abzubilden.

In anderen Worten kann das optische Element als Sendeoptik und/oder Empfangsoptik ausgebildet sein. Ein als Sendeoptik ausgebildetes optisches Element ist insbesondere als Zerstreuungslinse und ein als Empfangsoptik ausgebildetes optisches Element insbesondere als Sammellinse ausgebildet. So sorgt die Mikrostruktur des sendeseitig angeordneten optischen Elementes für die Funktion einer Zerstreuungslinse, während die Mikrostruktur des empfangsseitig angeordneten optischen Elementes die Funktion einer Sammellinse erzeugt. Es können dabei beiden Optiken identisch ausgebildet sein, wobei sich deren unterschiedliche Funktionen durch eine entgegengesetzte Anordnung, in anderen Worten Orientierung, zum durchtretenden Licht ergibt.

Reflektierte Messpulse auf die Empfangseinheit des LIDAR-Sensors abzubilden bedeutet insbesondere die reflektierten Messpulse aus verschiedenen Raumwinkeln zu empfangen und auf die Empfangseinheit abzubilden, wobei diese insbesondere in einer Brennebene des als Empfangsoptik ausgebildeten optischen Elementes angeordnet sein kann. Erzeugte Messpulse in die Umgebung des LIDAR-Sensors abzubilden bedeutet insbesondere die von der Sendeeinheit erzeugten Messpulse in verschiedene Raumwinkel auszusenden, wobei die Sendeeinheit insbesondere in einer Brennebene des als Sendeoptik ausgebildeten optischen Elementes angeordnet sein kann.

Das als Sendeoptik ausgebildete optische Element kann die einzige Linse des LIDAR-Sensors sein, die dazu dient Messpulse in eine Umgebung des LIDAR-Sensors abzubilden. Ferner kann das als Empfangsoptik ausgebildete optische Element die einzige Linse des LIDAR-Sensors sein, die dazu dient, Messpulse auf die Empfangseinheit des LIDAR-Sensors abzubilden. Vorzugsweise weist der LIDAR-Sensor keine weiteren Linsen als Sendeoptik und/oder Empfangsoptik auf. Ausgenommen hiervon sind lichtdurchlässige Oberflächen eines Fahrzeuges, durch die Messpulse ohnehin durchtreten. Dies können bspw. die Oberflächen eines Oberflächenelementes des Fahrzeuges sein. Ferner können hierunter die Oberflächen eines Bandpassfilters verstanden werden.

Der LIDAR-Sensor setzt somit vorzugsweise bewusst kein Mehrlinsensystem als Sende- und/oder Empfangsoptik ein. Dies ist im Gegensatz zum Stand der Technik, nach dem - um den hohen optischen Anforderungen gerecht zu werden - typischerweise Mehrlinsensysteme eingesetzt werden, die in einem mechanischen Tubus vereint und optisch genau ausgerichtet werden müssen. Da dies hier vorzugsweise nicht erfolgt, kann auf die bei einem Mehrlinsensystem notwendige Reduktion von Streulichtreflektion und Mehrfachreflektionen verzichtet werden, was sich vorteilhaft auf die Leistung des LIDAR-Sensors auswirkt. Ferner entfällt die Notwendigkeit einzelne Linsen, wie im Stand der Technik bekannt, optisch justieren zu müssen, Kompensatoren vorzusehen, Objektive nachträglich zu sortieren, etc. Zudem bietet das optische Element als einteilige Sende- und/oder Empfangsoptik weniger Angriffsfläche für thermische Effekte, bspw. ein Fokusdrift, oder mechanische Umwelteinflüsse, bspw. Schock- und Rütteltests, und eine entsprechende Alterung.

Der LIDAR-Sensor kann ferner eine erste Vielzahl, bspw. zwei oder drei, von mit einer Mikrostruktur versehenden optischen Elemente aufweisen, die jeweils als Sendeoptik dienen und/oder eine zweite Vielzahl, bspw. zwei, von mit einer Mikrostruktur versehenden optischen Elemente aufweisen, die jeweils als Empfangsoptik dienen. So sind die optischen Elemente der ersten Vielzahl jeweils als Sendeoptik ausgebildet und angeordnet, wobei die optischen Elemente der ersten Vielzahl jeweils als Empfangsoptik ausgebildet und angeordnet sind. Die optischen Elemente der ersten und/oder zweiten Vielzahl können parallel zueinander angeordnet sein, wobei Licht nacheinander durch die optischen Elemente tritt. So dienen die optischen Elemente der ersten Vielzahl gemeinsam dazu durchtretendes Licht in die Umgebung des LIDAR-Sensors abzubilden, während die optischen Elemente der zweiten Vielzahl gemeinsam dazu dienen Licht auf die Empfangseinheit abzubilden.

Ferner kann die erste Vielzahl identisch zur zweiten Vielzahl ausgebildet sein. In anderen Worten enthalten beide Vielzahlen die gleichen optischen Elemente, wobei sich die optischen Elemente innerhalb einer Vielzahl unterscheiden können.

Vorzugsweise sind die mit einer Mikrostruktur versehenden optischen Elemente die einzigen als Sendeoptik und/oder Empfangsoptik agierenden optischen Elemente und der LIDAR-Sensor weist keine weiteren Linsen als Sendeoptik oder Empfangsoptik auf, die keine auf einem Träger ausgebildete Mikrostruktur aufweisen. Ausgenommen hiervon sind erneut lichtdurchlässige Oberflächen eines Fahrzeuges, durch die Messpulse ohnehin durchtreten. Dies kann sich auf die Oberflächen eines Oberflächenelementes des Fahrzeuges oder eines Bandpassfilters beziehen.

Zudem kann das optische Element zusammen mit einer Linse, die keine Mikrostruktur aufweist, als Sendeoptik und/oder Empfangsoptik fungieren. Das mit einer Mikrostruktur versehende optische Element kann somit im Rahmen eines hybriden Ansatzes mit einer herkömmlichen Linse, bspw. einer refraktiven Linse, zusammenwirken.

Ferner kann der LIDAR-Sensor ein erstes optisches Element umfassen, das als Sendeoptik ausgebildet ist und ausschließlich dazu dient, erzeugte Messpulse in eine Umgebung des LIDAR-Sensors abzubilden und ein zweites optisches Element, das als Empfangsoptik dient und reflektierte Messpulse auf die Empfangseinheit abbildet. Beide optischen Elemente weisen jeweils einen Träger und eine Mikrostruktur auf.

Dabei sind das erste optische Element und das zweite optische Element insbesondere derart ausgebildet, dass die Brennweite des ersten optischen Elementes und die des zweiten optischen Elementes identisch sind, wobei das erste optische Element durch die Mikrostruktur als Zerstreuungslinse dient, während das zweite optische Element als Sammellinse fungiert.

Vorzugsweise ist das optische Element als Metalinse ausgebildet, sodass die Mikrostruktur eine Vielzahl von Strukturelementen als Lichtwellenleiter umfasst, wobei die Strukturelemente als Säulen oder Vertiefungen, insbesondere Sacklöcher, ausgebildet sind. Dabei kann sich die Höhe der Mikrostruktur, die parallel zu einer Dickenrichtung des Trägers angeordnet ist, auf die Strukturelemente in Bezug auf die erste Seite bzw. deren Oberfläche beziehen. Insbesondere sind alle Strukturelemente gleich hoch beziehungsweise gleich tief ausgebildet. Es kann sich vorzugsweise um eine dielektrische Metalinse handeln.

Die Strukturelemente haben insbesondere eine Ausdehnung senkrecht zu deren Höhenrichtung bzw. senkrecht zur Dickenrichtung des Trägers, von 0,1 µm bis 1 µm, vorzugsweise zwischen 0,2 µm und 0,5 µm. Die Höhenrichtung entspricht vorzugsweise der Dickenrichtung des Trägers. Der Abstand der Strukturelemente ist insbesondere kleiner als 1 µm, vorzugsweise kleiner als 0,5 µm, am meisten bevorzugt kleiner als 0,2 µm. Die Querschnittsform der Strukturelemente kann insbesondere ein Quader, Rechteck oder Kreis sein. Die Ausdehnung kann sich somit auf die Seiten des Quaders, die längere und/oder kürzere Seite des Rechtecks oder den Durchmesser des Kreises beziehen.

Der Teil der ersten oder der zweiten Seite, auf dem die mindestens eine Mikrostruktur angeordnet ist, kann als Metaoberfläche bezeichnet werden. In anderen Worten ist zumindest auf einem Teil der ersten oder der zweiten Seite des Trägers eine Metaoberfläche ausgebildet.

Bei den Strukturelementen handelt es sich um diskrete nanoskalige Elemente, die als Nanoantennen dienen. Jedes Strukturelement erzeugt beim Durchtreten von Licht eine Punktwelle, wobei sich die erzeugten Punktwellen überlagern und somit durch Interferenz eine neue Wellenfront, in anderen Worten Phasenfront der Welle, die im Vergleich zur Wellenfront des eintretenden Lichts vor Durchtritt durch das optische Element verändert ist.

Jedes Strukturelement kann somit als Quelle einer elektromagnetischen Welle vorgestellt werden, die sich mit allen anderen elektromagnetischen Wellen der anderen Strukturelemente überlagert und somit eine bestimmte Gesamtwelle, bspw. eine Kugelwelle, die in einem Brennpunkt zusammenläuft, erzeugt. Dabei ist die Anordnung und die Ausbildung der Strukturelemente entscheidend, da diese die resultierende Phasenfront bestimmt. Bspw. können die Strukturelemente derart ausgebildet und angeordnet sein, dass eine ebene Phasenfront in eine hyperbolische Phasenfront umgeformt wird, sodass das optische Element als fokussierende Linse agiert. Andersherum kann das optische Element mittels der Strukturelemente als Streulinse agieren.

Ferner kann das optische Element als diffraktives optisches Element ausgebildet sein, sodass die Mikrostruktur eine Vielzahl von Zonen unterschiedlicher Höhe umfasst, wobei sich die Höhen parallel zur Dickenrichtung des Trägers erstrecken. Im Gegensatz zu einer Metalinse sind keine diskreten Strukturelemente im Nanobereich ausgebildet, sondern, vorzugsweise konzentrische, unterschiedliche Zonen der Mikrostruktur.

Das diffraktive optische Element ist insbesondere eine diffraktive Linse. Bspw. kann die Mikrostruktur zwei Höhen aufweisen, sodass es sich um ein binäres diffraktives optisches Element handelt. Ferner können mehr als zwei Zonen unterschiedlicher Höhe ausgebildet sein, sodass es sich um eine multidiffraktive Linse handelt. Durch die unterschiedlichen Zonen wird durchfallendes Licht durch das optische Element unterschiedlich stark gebeugt. In anderen Worten unterscheidet sich der optische Weg, den das Licht erfährt, wenn es verschiedene Zonen durchläuft. Auf diese Weise kann das diffraktive optische Element erneut als Sammellinse oder Zerstreuungslinse fungieren.

Bei den Zonen handelt es sich insbesondere um konzentrische radiale Zonen. In anderen Worten können die Zonen ringförmig ausgebildet sein. Bspw. kann eine erste Zone in der Mitte des diffraktiven optischen Elementes angeordnet sein, die einen bestimmten maximalen Radius umfasst, während eine sich daran anschließende zweite Zone einen identischen minimalen Radius und einen größeren maximalen Radius aufweist. Die verschiedenen Zonen erstrecken sich somit ringförmig und koaxial um den Mittelpunkt des optischen Elementes. Die Zonen sind vorzugsweise als Stufen ausgebildet, sodass eine Stufenlandschaft entsteht.

Die Mikrostruktur mit den unterschiedlichen Zonen kann bspw. ein optisches Gitter darstellen. Es erfolgt die Lichtbeugung an der Mikrostruktur.

Vorzugsweise handelt es sich bei dem diffraktiven optischen Element um ein holografisches optisches Element, sodass die Mikrostruktur ein Hologramm darstellt.

Vorzugsweise kann auf der zweiten Seite des Trägers eine als Bandpassfilter ausgebildete Beschichtung angeordnet sein. In anderen Worten kann ein Bandpassfilter direkt in das optische Element integriert sein. Dies betrifft insbesondere ein als Sendeoptik ausgebildetes optisches Element. Die Integration erlaubt den Verzicht auf eine weitere optisch aktive Fläche und somit die Reduktion von Streulicht und störenden Reflektionen.

Vorzugsweise kann der LIDAR-Sensor als Solid-State-Sensor ausgebildet sein, sodass die Sendeeinheit als Sendearray und die Empfangseinheit als Empfangsarray ausgebildet ist mit einer Vielzahl von Sendeelementen und Empfangselemente, bspw. von Lasern und Detektoren, wobei eine Ausleuchtung eines Messbereichs des LIDAR-Sensors durch eine selektive Ansteuerung der Sendeelemente und Empfangselemente erreicht wird. Der Sendearray und/oder der Empfangsarray können als Focal-Plane-Array ausgebildet sein. Insbesondere werden keine beweglichen Spiegel eingesetzt, um ein zentrales Laserlicht unter unterschiedliche Raumwinkel auszusenden.

Dabei können Sendeelemente und Empfangselemente jeweils eineindeutig in Paaren zugeordnet sein. Durch die Sendeoptik kann folglich jedem Sendeelement ein bestimmter Raumwinkel zuordnet, wobei durch die Empfangsoptik der gleiche Raumwinkel dem entsprechenden Empfangselement zuordnet sein kann. Alternativ kann ein Sendeelement einen größeren Teilbereich des Blickfeldes beleuchten, wobei das reflektierte Licht empfangsseitig mehrere Empfangselemente beleuchtet.

Ferner kann der LIDAR-Sensor in einem Fahrzeug angeordnet sein, wobei der Träger des optischen Elementes als lichtdurchlässiges Oberflächenelement des Fahrzeuges ausgebildet sein kann. Bei dem Oberflächenelement kann es sich insbesondere um eine Windschutzscheibe oder eine Frontplatte eines Scheinwerfers handeln. Ferner sind auch seitliche oder rückblickende Oberflächenelemente möglich. Dies ermöglicht einen Verzicht auf weitere optische Flächen, da das optische Element direkt in dem Oberflächenelement integriert ist.

Entsprechende Oberflächenelemente sind meistens gekrümmt ausgebildet, sodass die Mikrostruktur dazu ausgebildet sein kann, die entsprechende Krümmung zu kompensieren, um optimale Abbildungseigenschaften zu erreichen. Insbesondere ist die Mikrostruktur auf einer Innenseite des Oberflächenelementes ausgebildet. Es entfällt die Notwendigkeit der Justierung, da bereits bei einer Fertigung des optischen Elementes auf dem Oberflächenelement eine hohe Genauigkeit erreicht wird.

Bevorzugterweise kann das mindestens eine optische Element schräg zur Empfangseinheit und/oder zur Sendeeinheit angeordnet sein. Dabei kann durch die Ausbildung der Mikrostruktur der Einfluss der Schrägstellung, bspw. auf die Brennebene, kompensiert werden. Durch die Schrägstellung können ferner Streueffekte, bspw. Ghosting und Flair, wesentlich reduziert werden. Unter einer Schrägstellung ist vorzugsweise zu verstehen, dass die Dickenrichtung des optischen Elementes nicht senkrecht auf einer optisch aktiven Oberfläche einer Sendeeinheit und/oder auf der optisch aktiven Oberfläche einer Empfangseinheit steht. Insbesondere beträgt der Winkel zwischen unter 88°, vorzugsweise unter 85°. In anderen Worten ist das optische Element nicht parallel zur Sendeeinheit und/oder Empfangseinheit ausgerichtet. Durch die Schrägstellung kann der Rückreflex, der nach Abbilden von Licht auf die Empfangseinheit entsteht, von der optisch aktiven Empfangseinheit ferngehalten werden.

Insbesondere weist das optische Element eine F-Zahl, das heißt ein Verhältnis von Brennweite zu Eintrittspupillendurchmesser, auf, der unter 1 liegt. Dies kann im Stand der Technik nur sehr schwierig mittels herkömmlicher, meist refraktiver, Linsen erreicht werden.

Es wird mittels des optischen Elementes die Bildkrümmung minimiert, da bei konventionellen Linsen nur mit weiteren optisch aktiven Flächen, bspw. mit asphärischen Linsen die Bildebene auf eine Ebene gebracht werden kann, da abhängig vom Einfallswinkel das Licht auf einer gekrümmten Brennebene fokussiert wird. Bei den oben beschriebenen optischen Elementen, vor allem bei Metalinsen, erfolgt die Veränderung der Phase vorzugsweise bereits auf einer Ebene beziehungsweise auf einer gekrümmten Fläche, wobei die Mikrostruktur diese Krümmung kompensiert, sodass die Bildfeldkrümmung minimiert werden kann. Dies verbessert die Gleichmäßigkeit der Abbildungsleistung über dem Bildbereich erheblich.

Ferner kann mittels der optischen Elemente, die vorzugsweise als Metalinsen ausgebildet sind, eine telezentrische Abbildung ermöglicht werden, ohne dass dies zu einer hohen Beeinträchtigung der Bildschärfe oder anderen kritischen Parametern geht.

Vorzugsweise kann das optische Element zwei unterschiedlich große Brennweiten umfassen. Durch eine bestimmte Anordnung und Ausbildung der Strukturelemente der Metalinse kann das optische Element mit zwei Brennweiten versehen werden.

Bspw. kann die Mikrostruktur erste Strukturelemente und zweite Strukturelemente umfassen, die sich unterscheiden. Einfallendes Licht kann mittels der ersten Strukturelemente bei einer ersten Brennweite und mittels der zweiten Strukturelemente bei einer zweiten Brennweite fokussiert werden. Dabei können die Bereiche der Mikrostruktur, die für die unterschiedlichen Brennweiten sorgen, räumlich voneinander getrennt sein. Bspw. kann ein innerer Bereich ausschließlich mit ersten Strukturelementen und somit einer ersten Brennweite und ein äußerer Bereich ausschließlich mit zweiten Strukturelementen und somit einer zweiten Brennweite versehen sein. Ferner können die Strukturelemente nicht voneinander räumlich getrennt sein, sondern erste Strukturelemente und zweite Strukturelemente können im gleichen Bereich vorliegen. Bei den verschiedenen Brennweiten kann es sich um unterschiedliche Brennweiten in vertikaler oder horizontaler Richtung handeln. Ferner kann sich die Brennweite kontinuierlich, bspw. in vertikaler oder horizontaler Richtung, verändern.

Ferner kann der LIDAR-Sensor ein optisches Element umfassen, das sowohl sendeseitig als auch empfangsseitig tätig ist. Das optische Elemente kann einen ersten Bereich und einen zweiten Bereich umfassen, wobei im zweiten Bereich eine erste Mikrostruktur angeordnet ist. Der erste Bereich kann bspw. ein zentraler Bereich um den Mittelpunkt des optischen Elementes sein. Der zweite Bereich kann sich vorzugsweise als radialer, in anderen Worten ringförmiger, Bereich um den ersten Bereich herum erstrecken.

Im ersten Bereich kann eine zweite Mikrostruktur ausgebildet sein, die unterschiedlich zu der im zweiten Bereich ausgebildeten Mikrostruktur ist. Diese zweite Mikrostruktur könnte im ersten Bereich auf der ersten Seite und/oder der zweiten Seite des optischen Elementes angeordnet sein. Ferner kann im ersten Bereich keine Mikrostruktur, weder auf der ersten Seite noch auf der zweiten Seite, ausgebildet sein.

Der zweite Bereich ist insbesondere derart ausgebildet und angeordnet, um reflektierte Messpulse auf die Empfangseinheit abzubilden. Ferner kann der erste Bereich derart ausgebildet und angeordnet sein, um von der Sendeeinheit erzeugte Messpulse in eine Umgebung des LIDAR-Sensors abzubilden. Es kann sich somit um ein konfokales System handeln, das durch unterschiedliche optische Bereiche eingehendes Licht unterschiedlich abbilden kann.

Ferner kann im ersten Bereich auf einer Seite des Trägers, bspw. auf der ersten oder der zweiten Seite, des optischen Elementes ein Umlenkelement zum Umlenken von Messpulsen einer Sendeeinheit angeordnet sein, vorzugsweise eine MEMS-Einheit, bspw. ein MEMS-Spiegel. Dieser kann Licht von einer Sendeeinheit umlenken, die bspw. seitlich vom optischen Element angeordnet ist.

Ferner kann im ersten Bereich entweder auf der zweiten Seite oder der ersten Seite die Sendeeinheit, bspw. ein optisches phasengesteuertes Array, angeordnet sein, der durch entsprechende Lichtkanäle Messpulse aussendet.

Dabei gilt es durch Anordnung des optischen phasengesteuerten Arrays und/oder der der Umlenkeinheit einen möglichst kleinen Bereich des optischen Elementes abzudecken.

Ferner kann das Umlenkelement oder die Sendeeinheit nicht direkt auf dem Träger angeordnet sein, sondern das Umlenkelement oder die Sendeeinheit können in Dickenrichtung des Trägers vor der ersten Seite und in einem Abstand zu dieser oder vor der zweiten Seite und in einem Abstand zu dieser angeordnet sein.

Die Sendeeinheit und/oder das Umlenkelement können eine Mikrostruktur auf einer Oberfläche aufweisen, sodass die Phasenfront des erzeugten und ausgesandten bzw. umgelenkten Lichtes direkt optisch verändert werden kann.

Das optische Element mit den zwei Bereichen kann mit einem weiteren optischen Element mit einem Träger und einer Mikrostruktur zusammenarbeiten. Dabei können beide optischen Elemente den gleichen Durchmesser aufweisen und parallel zueinander angeordnet sein.

In einem weiteren Aspekt betrifft die Erfindung ein Verfahren zur optischen Distanzmessung, wobei das Verfahren einen oben beschriebenen LIDAR-Sensor verwendet.

Insbesondere umfasst das Verfahren das Abbilden von mittels einer Sendeeinheit erzeugter Messpulse und/oder reflektierter Messpulse mittels eines oben beschriebenen optischen Elementes. Ferner kann das Verfahren eine Ermittlung der Lichtlaufzeit der reflektierten Messpulse und somit eine Bestimmung der Entfernung von Objekten, an dem die Messpulse reflektiert wurden, umfassen.

### Kurze Beschreibung der Figuren

Es zeigen in rein schematischer Darstellung:
- Figur 1:: eine Seitenansicht eines erfindungsgemäßen LIDAR-Sensors;
- Figur 2:: eine Seitenansicht eines als Empfangsoptik ausgebildeten optischen Elementes des LIDAR-Sensors der Figur 1;
- Figur 3:: eine Seitenansicht eines als Sendeoptik ausgebildeten optischen Elementes des LIDAR-Sensors der Figur 1;
- Figur 4:: eine Seitenansicht eines weiteren erfindungsgemäßen LIDAR-Sensors;
- Figur 5:: eine Seitenansicht eines weiteren erfindungsgemäßen LIDAR-Sensors;
- Figur 6:: einen Ausschnitt einer perspektivischen Ansicht eines optischen Elementes eines erfindungsgemäßen LIDAR-Sensors;
- Figur 7:: einen Ausschnitt einer perspektivischen Ansicht eines optischen Elementes eines erfindungsgemäßen LIDAR-Sensors;
- Figur 8:: einen Ausschnitt einer perspektivischen Ansicht eines optischen Elementes eines erfindungsgemäßen LIDAR-Sensors;
- Figur 9:: eine seitliche Ansicht eines weiteren erfindungsgemäßen LIDAR-Sensors;
- Figur 10:: eine Draufsicht auf die erste Seite des optischen Elementes der Figur 9;
- Figur 11:: eine seitliche Ansicht eines weiteren erfindungsgemäßen LIDAR-Sensors; und
- Figur 12:: eine Draufsicht auf die erste Seite des optischen Elementes der Figur 11.

### Bevorzugte Ausführungsformen

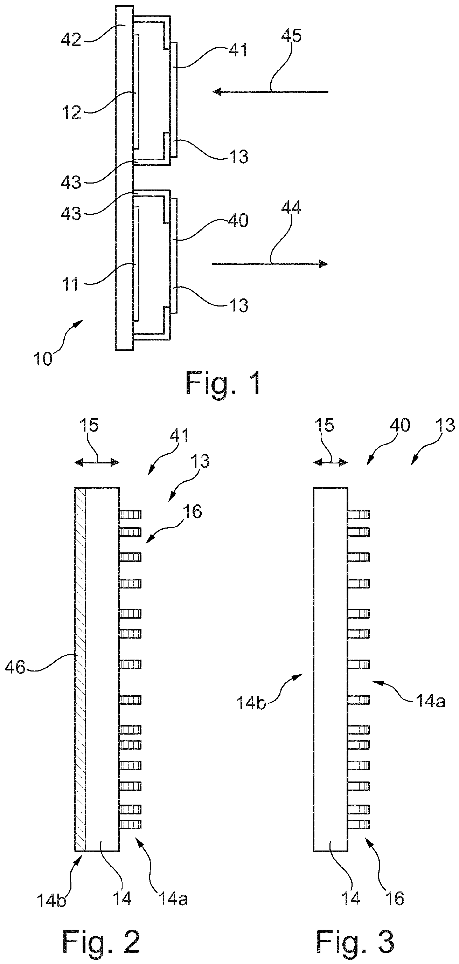

In Figur 1 ist eine Seitenansicht eines erfindungsgemäßen LIDAR-Sensors 10 zu sehen, der eine Sendeeinheit 11 und eine Empfangseinheit 12 umfasst. Diese sind auf einem Halter 42 angeordnet. Der LIDAR-Sensor 10 umfasst zwei optische Elemente 13, und zwar eine Sendeoptik 40 zum Aussenden erzeugter Messpulse 44 und eine Empfangsoptik 41 zum Empfangen reflektierter Messpulse 45. Die optischen Elemente 13, die jeweils von einem Objektivhalter 43 gehalten werden, umfassen jeweils einen Träger 14 und eine Mikrostruktur 16 (siehe Figuren 2 und 3). Die Sendeoptik 40 ist hinter der Sendeeinheit angeordnet, während die Empfangsoptik 41 vor der Empfangseinheit 12 angeordnet ist.

In Figur 2 ist eine Seitenansicht des als Empfangsoptik 41 ausgebildeten optischen Elementes 13 des LIDAR-Sensors der Figur 1 dargestellt, wobei deutlich der Träger 14 mit einer ersten Seite 14a und einer zweiten Seite 14b zu sehen ist. Auf der ersten Seite 14a ist die Mikrostruktur 16 ausgebildet. Der Träger 14 ist als Plättchen ausgebildet, sodass die erste Seite 14a und die zweite Seite 14b (bis auf die Mikrostruktur) plan ausgebildet sind. Die Mikrostruktur 16 erstreckt sich in Dickenrichtung 15 des Trägers 14. Auf der zweiten Seite 14b weist der Träger 14 eine als Bandpassfilter ausgebildete Beschichtung 46 auf. Der Bandpassfilter ist somit in das optische Element 13 integriert.

Figur 3 zeigt eine Seitenansicht des als Sendeoptik 40 ausgebildeten optischen Elementes 13, ebenfalls umfassend einen Träger 14 und eine Mikrostruktur 16, die sich in Dickenrichtung 15 des Trägers 14 erstreckt. Auf der zweiten Seite 14b ist kein Bandpassfilter ausgebildet.

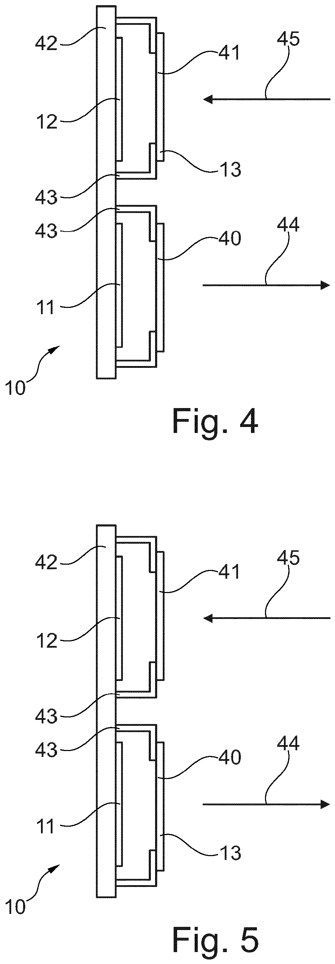

In Figur 4 ist eine Seitenansicht eines erfindungsgemäßen LIDAR-Sensors 10 zu sehen, der bis auf die folgenden Unterschiede analog zu dem LIDAR-Sensor 10 der Figur 1 ausgebildet ist: Bei dem LIDAR-Sensor der Figur 4 ist nur die Empfangsoptik 41 als optisches Element 13 ausgebildet. Die Empfangsoptik 41 kann nach Figur 2 ausgebildet sein. Die Sendeoptik 40 ist hingegen als Optik ohne Mikrostruktur 16 ausgebildet, bspw. als refraktive Linse.

Figur 5 zeigt eine Seitenansicht eines erfindungsgemäßen LIDAR-Sensors 10, der bis auf die folgenden Unterschiede analog zum LIDAR-Sensor 10 der Figur 1 ausgebildet ist: Im Gegensatz zum LIDAR-Sensor 10 der Figur 1 ist nur die Sendeoptik 40 als optisches Element 13 ausgebildet, während die Empfangsoptik 41 als Optik ohne Mikrostruktur 16 ausgebildet, bspw. als refraktive Linse, ausgebildet sein kann. Die Sendeoptik 40 kann nach Figur 3 ausgebildet sein.

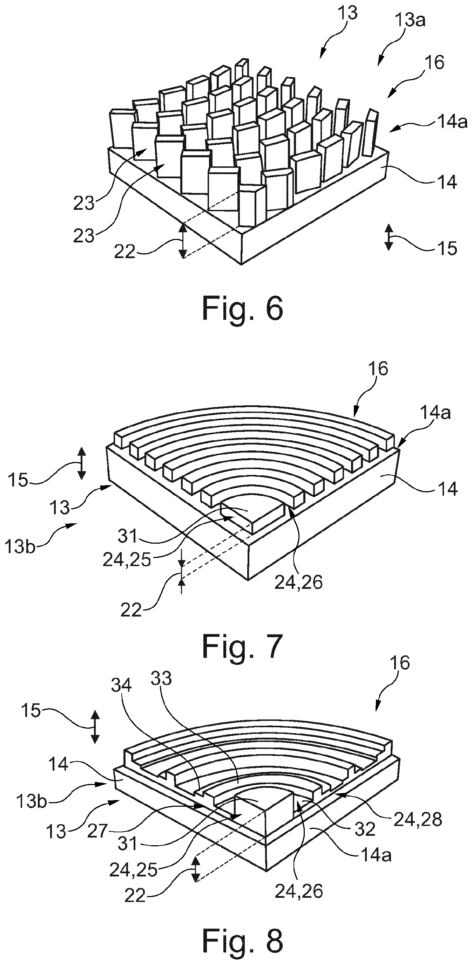

In Figur 6 ist ein Ausschnitt einer perspektivischen Ansicht eines optischen Elementes 13 eines erfindungsgemäßen LIDAR-Sensors 10 gezeigt.

Es sind der Träger 14, und zwar dessen erste Seite 14a, und die darauf ausgebildete Mikrostruktur 16 zu sehen. Die Mikrostruktur 16 setzt sich in diesem Fall aus einer Vielzahl von Strukturelementen 23 zusammen, die sich säulenartig von der ersten Seite 14a erheben. Die Höhe 22 ergibt sich als maximaler Höhenunterschied der Strukturelemente 23 im Vergleich zur ersten Seite 14a. Es handelt sich bei dem optischen Element 13 um eine Metalinse 13a. Die einzelnen Strukturelemente 23 fungieren als Lichtwellenleiter.

In Figur 7 ist ein Ausschnitt einer perspektivischen Ansicht eines optisches Elementes 13 eines erfindungsgemäßen LIDAR-Sensors 10 gezeigt, das als diffraktives optisches Element 13b ausgebildet ist.

Es umfasst einen Träger 14 und eine Mikrostruktur 16 die sich in Dickenrichtung 15 des Trägers 14 erstrecken. In Figur 7 ist eine erste zentrale Zone 25 sowie eine zweite, sich daran anschließende radiale Zone 26 zu sehen. Während sich in der ersten Zone 25 eine erste Stufe 31 der Mikrostruktur 16 in Dickenrichtung 15 erhebt, ist die Mikrostruktur 16 in der zweiten Zone 26 nicht gegenüber der ersten Seite 14a des Trägers 14 erhaben. Es schließen sich weitere erste Zonen 25 und zweite Zonen 26 mit entsprechenden ersten Stufen 31 in den ersten Zonen 25 abwechselnd an. Es ist eine binäre Stufenlandschaft zur Beugung von Licht ausgebildet. Es ergibt sich eine Höhe 22 der Mikrostruktur 16, die dem maximalen Höhenunterschied, sprich der Höhe der ersten Stufe 31, entspricht.

Figur 8 zeigt ebenfalls einen Ausschnitt einer perspektivischen Ansicht eines als diffraktives optisches Element 13b ausgebildeten optischen Elementes 13 mit verschiedenen Zonen 24, also auch eine zweite Zone 26, eine dritte Zone 27 und eine vierte Zone 28. In der ersten Zone 25 befindet sich eine erste Stufe 31, in der zweiten Zone 26 eine zweite Stufe 32, in der dritten Zone 27 eine dritte Stufe 33 und in der vierten Zone 28 eine vierte Stufe 34. Insgesamt ist eine vierstufige Stufenlandschaft zur Beugung einfallenden Lichtes ausgebildet. Die Höhe 22 der Mikrostruktur 16 ergibt sich als größter Höhenunterschied, und zwar hier zwischen der ersten Stufe 31 und der zweiten Stufe 32.

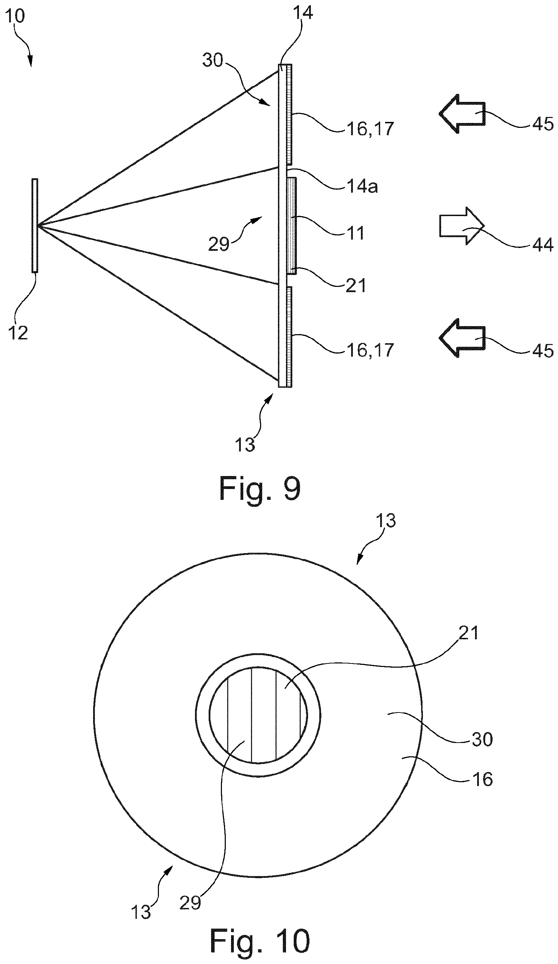

In Figur 9 ist eine seitliche Ansicht eines weiteren erfindungsgemäßen LIDAR-Sensors 10 gezeigt, der eine Empfangseinheit 12 und einen optischen phasengesteuerten Array 21, der die Sendeeinheit 11 bildet, aufweist. Der optische phasengesteuerte Array 21 ist direkt auf der ersten Seite 14a des Trägers 14 eines optischen Elementes 13 des LIDAR-Sensors 10 ausgebildet, und zwar in einem ersten zentralen Bereichs 29 des optischen Elementes 13. In einem zweiten radial äußeren Bereich 30 ist auf der ersten Seite 14a des Trägers 14 eine Mikrostruktur 16, und zwar eine erste Mikrostruktur 17, zum Empfangen reflektierter Messpulse 45 ausgebildet. Die erste Mikrostruktur 17 bildet empfangende Messpulse auf die Empfangseinheit 12 ab.

Figur 10 zeigt eine Draufsicht auf die erste Seite 14a des optischen Elementes 13 der Figur 9, wobei deutlich der erste Bereich 29 und der zweite Bereich 30 zu sehen ist, wobei im ersten Bereich 29 der optische phasengesteuerte Array 21 und im zweiten Bereich 30 die Mikrostruktur 16 ausgebildet ist. Auf der Oberfläche des optischen phasengesteuerten Arrays 21 kann eine weitere Mikrostruktur angeordnet sein.

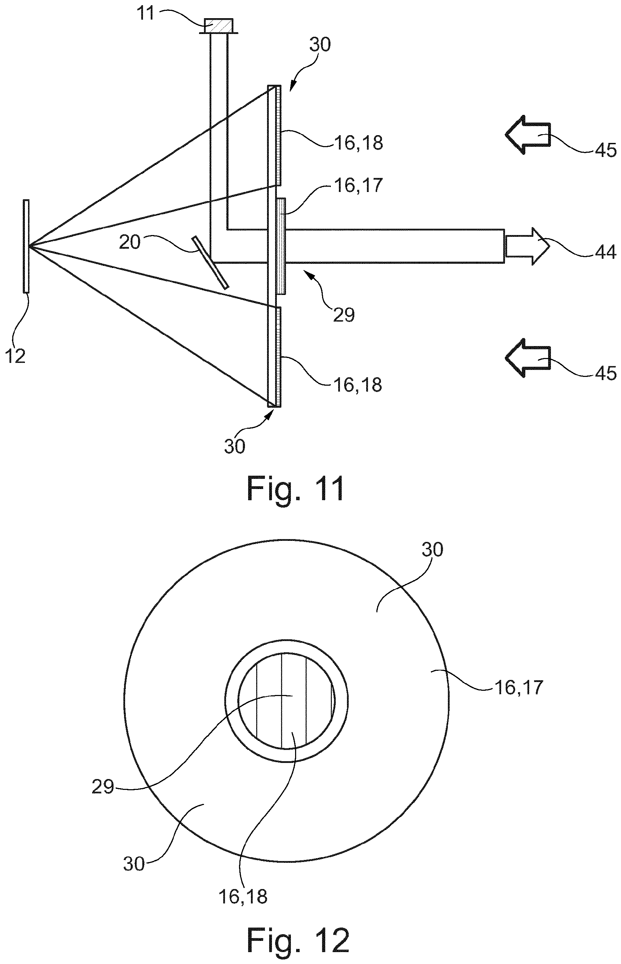

Figur 11 zeigt eine seitliche Ansicht eines weiteren erfindungsgemäßen LIDAR-Sensors 10, der bis auf die im Folgenden beschriebenen Unterschiede analog zu dem LIDAR-Sensor der Figur 7 ausgebildet ist:

Statt einem optischen phasengesteuerten Array 21 ist auf der ersten Seite 14a des Trägers 14 des optischen Elementes 13 eine MEMS-Einheit 20, insbesondere ein MEMS-Spiegel, in Strahlenrichtung der erzeugten Messpulse vor dem optischen Element 13 angeordnet, um erzeugte Messpulse einer Sendeeinheit 11 durch den ersten Bereich 29 zu lenken. Im ersten Bereich 29 ist auf der ersten Seite 14a eine zweite Mikrostruktur 18 ausgebildet, die unterschiedlich zur ersten Mikrostruktur 17 ist.

Figur 12 zeigt eine Draufsicht auf die erste Seite 14a des optischen Elementes 13 der Figur 11, mit dem ersten Bereich 29 mit der ersten Mikrostruktur 17 und dem zweiten radial äußeren Bereich 30 mit der zweiten Mikrostruktur 18.

### Bezugszeichen

- 10: LIDAR-Sensor
- 11: Sendeeinheit
- 12: Empfangseinheit
- 13: optisches Element
- 13a: Metalinse
- 13b: diffraktives optisches Element
- 14: Träger
- 14a: erste Seite
- 14b: zweite Seite
- 15: Dickenrichtung des Trägers
- 16: Mikrostruktur
- 17: erste Mikrostruktur
- 18: zweite Mikrostruktur

- 20: MEMS-Einheit
- 21: optischer phasengesteuerter Array
- 22: Höhe
- 23: Strukturelemente
- 24: Zonen
- 25: erste Zone
- 26: zweite Zone
- 27: dritte Zone
- 28: vierte Zone
- 29: erster Bereich

- 30: zweiter Bereich
- 31: erste Stufe
- 32: zweite Stufe
- 33: dritte Stufe
- 34: vierte Stufe

- 40: Sendeoptik
- 41: Empfangsoptik
- 42: Halter
- 43: Objektivhalter
- 44: erzeugte Messpulse
- 45: reflektierte Messpulse
- 46: als Bandpassfilter ausgebildete Beschichtung

## Patentansprüche

1. LIDAR-Sensor (10) zur optischen Distanzmessung,
wobei der LIDAR-Sensor (10) eine Sendeeinheit (11) zum Aussenden von Messpulsen und eine Empfangseinheit (12) zum Empfangen reflektierter Messpulse aufweist,
wobei der LIDAR-Sensor (11) mindestens ein optisches Element (13) umfasst,
**dadurch gekennzeichnet, dass**
das optische Element (13) einen lichtdurchlässigen Träger (14) und mindestens eine auf zumindest einem Teil einer ersten Seite (14a) des Trägers (14) ausgebildete Mikrostruktur (16) umfasst,
wobei die Mikrostruktur (16) eine Höhe (22) zwischen 0,1 µm und 100 µm aufweist.

2. LIDAR-Sensor (10) nach Anspruch 1,
**dadurch gekennzeichnet, dass**
die Höhe (22) der Mikrostruktur (16) parallel zur Dickenrichtung (15) des Trägers (14) ausgerichtet ist
und/oder dass das optische Element (13) eine Dicke von kleiner als 7 mm aufweist.

3. LIDAR-Sensor (10) nach einem der Ansprüche 1 oder 2,
**dadurch gekennzeichnet, dass**
das optische Element (13) derart ausgebildet und angeordnet ist um reflektierte Messpulse auf die Empfangseinheit (12) abzubilden und/oder das optische Element (13) derart ausgebildet und angeordnet ist um von der Sendeeinheit (11) erzeugte Messpulse in eine Umgebung des LIDAR-Sensors (10) abzubilden.

4. LIDAR-Sensor (10) nach einem der vorangehenden Ansprüche,
**dadurch gekennzeichnet, dass**
der LIDAR-Sensor (10) ein erstes optisches Element und ein zweites optisches Element umfasst,
wobei das erste optische Element derart ausgebildet und angeordnet ist um reflektierte Messpulse auf die Empfangseinheit (12) abzubilden und das zweite optische Element derart ausgebildet und angeordnet ist um von der Sendeeinheit (11) erzeugte Messpulse in eine Umgebung des LIDAR-Sensors (10) auszusenden.

5. LIDAR-Sensor (10) nach einem der vorangehenden Ansprüche,
**dadurch gekennzeichnet, dass**
das optische Element (13) als Metalinse (13a) ausgebildet ist,
sodass die Mikrostruktur (16) eine Vielzahl von Strukturelementen (23) als Lichtwellenleiter umfasst,
wobei die Strukturelemente (23) als Säulen oder Vertiefungen ausgebildet sind.

6. LIDAR-Sensor (10) nach einem der Ansprüche 1 bis 4,
**dadurch gekennzeichnet, dass**
das optische Element (13) als diffraktives optisches Element (13b) ausgebildet ist,
sodass die Mikrostruktur (13) eine Vielzahl von Zonen (24) mit parallel zur Dickenrichtung (15) des Trägers (14) unterschiedlichen Höhen umfasst.

7. LIDAR-Sensor (10) nach einem der vorangehenden Ansprüche,
**dadurch gekennzeichnet, dass**
das optische Element (13) eine zweite Seite (14b) aufweist,
wobei die erste Seite (14a) und/oder die zweite Seite (14b) des Trägers (14) eben oder gekrümmt ausgebildet ist.

8. LIDAR-Sensor (10) nach einem der vorangehenden Ansprüche,
**dadurch gekennzeichnet, dass**
auf der zweiten Seite (14b) eine als Bandpassfilter ausgebildete Beschichtung (46) angeordnet ist.

9. LIDAR-Sensor (10) nach einem der vorangehenden Ansprüche,
**dadurch gekennzeichnet, dass**
der LIDAR-Sensor (10) in einem Fahrzeug angeordnet ist,
wobei der Träger (14) des optischen Elementes (13) als lichtdurchlässiges Oberflächenelement des Fahrzeuges ausgebildet ist.

10. LIDAR-Sensor (10) nach Anspruch 9,
**dadurch gekennzeichnet, dass**
es sich bei dem Oberflächenelement um eine Windschutzscheibe oder eine Frontplatte eines Scheinwerfers handelt.

11. LIDAR-Sensor (10) nach einem der vorangehenden Ansprüche,
**dadurch gekennzeichnet, dass**
der LIDAR-Sensor (10) eine erste Vielzahl von mit einer Mikrostruktur (16) versehenden optischen Elemente (13) und/oder eine zweite Vielzahl von mit einer Mikrostruktur (16) versehenden optischen Elemente (13) aufweist,
wobei die optischen Elemente (13) der ersten Vielzahl jeweils als Sendeoptik ausgebildet und angeordnet sind und wobei die optischen Elemente (13) der ersten Vielzahl jeweils als Empfangsoptik ausgebildet und angeordnet sind.

12. LIDAR-Sensor (10) nach einem der vorangehenden Ansprüche,
**dadurch gekennzeichnet, dass**
das optische Element (13) zwei unterschiedlich große Brennweiten umfasst.

13. LIDAR-Sensor (10) nach einem der vorangehenden Ansprüche,
**dadurch gekennzeichnet, dass**
das optische Element (13) einen ersten Bereich (29) und einen zweiten Bereich (30) aufweist,
wobei im zweiten Bereich auf der ersten Seite (14a) des Trägers (14) (30) eine erste Mikrostruktur (17) ausgebildet ist,
und wobei im ersten Bereich (29) keine Mikrostruktur (16) oder eine im Vergleich zum zweiten Bereich unterschiedliche Mikrostruktur (16) ausgebildet ist.

14. LIDAR-Sensor (10) nach Anspruch 13,
**dadurch gekennzeichnet, dass**
der zweite Bereich (30) derart ausgebildet und angeordnet ist um reflektierte Messpulse auf die Empfangseinheit (12) abzubilden und/oder
dass der erste Bereich (29) derart ausgebildet und angeordnet ist um von der Sendeeinheit (11) erzeugte Messpulse in eine Umgebung des LIDAR-Sensors (10) abzubilden.

15. Verfahren zur optischen Distanzmessung,
**dadurch gekennzeichnet,**
**dass** das Verfahren einen LIDAR-Sensor (10) nach einem der Ansprüche 1 bis 14 verwendet.

## Geänderte Patentansprüche

### Geänderte Patentansprüche gemäss Regel 137(2) EPÜ.

1. LIDAR-Sensor (10) zur optischen Distanzmessung,
wobei der LIDAR-Sensor (10) eine Sendeeinheit (11) zum Aussenden von Messpulsen und eine Empfangseinheit (12) zum Empfangen reflektierter Messpulse aufweist,
wobei der LIDAR-Sensor (11) mindestens ein optisches Element (13) umfasst, **dadurch gekennzeichnet, dass**
das optische Element (13) einen lichtdurchlässigen Träger (14) und mindestens eine auf zumindest einem Teil einer ersten Seite (14a) des Trägers (14) ausgebildete Mikrostruktur (16) umfasst,
wobei die Mikrostruktur (16) eine Höhe (22) zwischen 0,1 µm und 100 µm aufweist,
wobei das optische Element (13) als Metalinse (13a) ausgebildet ist, sodass die Mikrostruktur (16) eine Vielzahl von Strukturelementen (23) als Lichtwellenleiter umfasst,
wobei die Strukturelemente (23) als Säulen oder Vertiefungen ausgebildet sind, wobei die Höhe der Mikrostruktur (16) als maximaler Höhenunterschied der Strukturelemente (23) im Vergleich zur ersten Seite (14a) zu verstehen ist.

2. LIDAR-Sensor (10) nach Anspruch 1,
**dadurch gekennzeichnet, dass**
die Höhe (22) der Mikrostruktur (16) parallel zur Dickenrichtung (15) des Trägers (14) ausgerichtet ist
und/oder dass das optische Element (13) eine Dicke von kleiner als 7 mm aufweist.

3. LIDAR-Sensor (10) nach einem der Ansprüche 1 oder 2,
**dadurch gekennzeichnet, dass**
das optische Element (13) derart ausgebildet und angeordnet ist um reflektierte Messpulse auf die Empfangseinheit (12) abzubilden und/oder das optische Element (13) derart ausgebildet und angeordnet ist um von der Sendeeinheit (11) erzeugte Messpulse in eine Umgebung des LIDAR-Sensors (10) abzubilden.

4. LIDAR-Sensor (10) nach einem der vorangehenden Ansprüche,
**dadurch gekennzeichnet, dass**
der LIDAR-Sensor (10) ein erstes optisches Element und ein zweites optisches Element umfasst,
wobei das erste optische Element derart ausgebildet und angeordnet ist um reflektierte Messpulse auf die Empfangseinheit (12) abzubilden und das zweite optische Element derart ausgebildet und angeordnet ist um von der Sendeeinheit (11) erzeugte Messpulse in eine Umgebung des LIDAR-Sensors (10) auszusenden.

5. LIDAR-Sensor (10) nach einem der vorangehenden Ansprüche,
**dadurch gekennzeichnet, dass**
das optische Element (13) eine zweite Seite (14b) aufweist,
wobei die erste Seite (14a) und/oder die zweite Seite (14b) des Trägers (14) eben oder gekrümmt ausgebildet ist.

6. LIDAR-Sensor (10) nach Anspruch 5,
**dadurch gekennzeichnet, dass**
auf der zweiten Seite (14b) eine als Bandpassfilter ausgebildete Beschichtung (46) angeordnet ist.

7. LIDAR-Sensor (10) nach einem der vorangehenden Ansprüche,
**dadurch gekennzeichnet, dass**
der LIDAR-Sensor (10) in einem Fahrzeug angeordnet ist,
wobei der Träger (14) des optischen Elementes (13) als lichtdurchlässiges Oberflächenelement des Fahrzeuges ausgebildet ist.

8. LIDAR-Sensor (10) nach Anspruch 7,
**dadurch gekennzeichnet, dass**
es sich bei dem Oberflächenelement um eine Windschutzscheibe oder eine Frontplatte eines Scheinwerfers handelt.

9. LIDAR-Sensor (10) nach einem der vorangehenden Ansprüche,
**dadurch gekennzeichnet, dass**
der LIDAR-Sensor (10) eine erste Vielzahl von mit einer Mikrostruktur (16) versehenden optischen Elemente (13) und/oder eine zweite Vielzahl von mit einer Mikrostruktur (16) versehenden optischen Elemente (13) aufweist, wobei die optischen Elemente (13) der ersten Vielzahl jeweils als Sendeoptik ausgebildet und angeordnet sind und wobei die optischen Elemente (13) der zweiten Vielzahl jeweils als Empfangsoptik ausgebildet und angeordnet sind.

10. LIDAR-Sensor (10) nach einem der vorangehenden Ansprüche,
**dadurch gekennzeichnet, dass**
das optische Element (13) zwei unterschiedlich große Brennweiten umfasst.

11. LIDAR-Sensor (10) nach einem der vorangehenden Ansprüche,
**dadurch gekennzeichnet, dass**
das optische Element (13) einen ersten Bereich (29) und einen zweiten Bereich (30) aufweist,
wobei im zweiten Bereich auf der ersten Seite (14a) des Trägers (14) (30) eine erste Mikrostruktur (17) ausgebildet ist,
und wobei im ersten Bereich (29) keine Mikrostruktur (16) oder eine im Vergleich zum zweiten Bereich unterschiedliche Mikrostruktur (16) ausgebildet ist.

12. LIDAR-Sensor (10) nach Anspruch 11,
**dadurch gekennzeichnet, dass**
der zweite Bereich (30) derart ausgebildet und angeordnet ist um reflektierte Messpulse auf die Empfangseinheit (12) abzubilden und/oder dass der erste Bereich (29) derart ausgebildet und angeordnet ist um von der Sendeeinheit (11) erzeugte Messpulse in eine Umgebung des LIDAR-Sensors (10) abzubilden.

13. Verfahren zur optischen Distanzmessung,
**dadurch gekennzeichnet,**
**dass** das Verfahren einen LIDAR-Sensor (10) nach einem der Ansprüche 1 bis 12 verwendet.
